(19)

**Europäisches Patentamt**

**European Patent Office**

**Office européen des brevets**

(11) **EP 2 653 387 B1**

(12) **FASCICULE DE BREVET EUROPEEN**

(45) Date de publication et mention de la délivrance du brevet:
**16.04.2014   Bulletin 2014/16**

(21) Numéro de dépôt: **13001808.8**

(22) Date de dépôt: **09.04.2013**

(51) Int Cl.:
**B64D 43/00** *(2006.01)*     **G01C 23/00** *(2006.01)*
**G05D 1/00** *(2006.01)*     **G05D 1/08** *(2006.01)*

(54) **Instrument de secours pour aéronef**

Notinstrument für einen Luftfahrzeug

Backup instrument for an aircraft

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **20.04.2012  FR 1201164**

(43) Date de publication de la demande:
**23.10.2013   Bulletin 2013/43**

(73) Titulaire: **Airbus Helicopters**
**13725 Marignane Cedex (FR)**

(72) Inventeurs:
• **Bailly, Stéphane**
 **13480 Cabries (FR)**
• **Germanetti, Serge**
 **13005 Marseille (FR)**

• **Salesse-Lavergne, Marc**
 **13011 Marseille (FR)**

(74) Mandataire: **Pouillot, Laurent Pierre Paul**
**GPI & Associés**
**Europarc de Pichaury**
**Bât. B2 - 1er Et.**
**1330 Rue Guillibert de la Lauzière**
**13856 Aix-en-Provence cedex 3 (FR)**

(56) Documents cités:
**EP-A1- 0 816 226      EP-A1- 1 482 277**
**EP-A1- 2 301 844      EP-A2- 1 884 816**
**WO-A2-2009/010510     FR-A1- 2 756 256**
**FR-A1- 2 784 457      FR-A1- 2 924 213**
**US-A- 3 752 420      US-A1- 2007 164 166**

**Description**

La présente invention se situe dans le domaine technique des instruments de secours pour le pilotage d'aéronef. La présente invention concerne un instrument de secours combinant plusieurs types de fonctions, c'est-à-dire la fourniture d'informations de vol, d'une information de marge de puissance ou de couple et d'une assistance au pilotage. Cet instrument de secours est plus particulièrement destiné aux aéronefs à voilure tournante. L'invention concerne également le procédé de fonctionnement de cet instrument de secours.

Un instrument de secours intervient lors de la panne d'un système d'information principal pour le suppléer et fournir au pilote les informations essentielles et considérées comme critiques au sens de la sécurité de vol. Le pilote peut ainsi continuer de piloter l'aéronef en toute sécurité malgré la panne du système d'information principal. Les informations critiques généralement fournies par cet instrument de secours sont la vitesse d'avancement de l'aéronef, son altitude, ses assiettes voire son cap. Par assiettes, il faut comprendre ses angles d'Euler de roulis et de tangage.

Un tel instrument de secours intègre l'ensemble des ressources nécessaires, notamment un ou plusieurs capteurs inertiels et de pression ainsi qu'une ou plusieurs unités de visualisation, traditionnellement un écran. De fait, cet instrument de secours est indépendant du système d'information principal. Un tel instrument de secours est généralement désigné par les initiales ISIS correspondant à la désignation en langue anglaise « Integrated Standby Instrument System » ou encore par les initiales IESI correspondant à la désignation en langue anglaise « Integrated Electronic Standby Instrument ».

Lors de la panne d'un dispositif d'assistance principale au pilotage, un autre instrument peut le suppléer et fournir au pilote une assistance partielle, principalement une stabilisation à court terme sur les vitesses angulaires en roulis, tangage et lacet. Cette stabilisation à court terme a pour but de s'opposer à l'apparition de vitesses angulaires de l'aéronef, sous forme de dérive ou d'oscillation, sur les axes de roulis, tangage et lacet. Un tel instrument intègre un capteur inertiel, de type gyroscopique, ainsi qu'un moyen de calcul pour déterminer les lois de commande de cette stabilisation de l'aéronef.

Certains aéronefs peuvent également comporter un dispositif fournissant des informations concernant la gestion de la puissance de leurs moteurs. Un tel dispositif fournit en général une première limite d'utilisation du ou des moteurs au-dessus de laquelle le pilote ne peut utiliser l'aéronef que pendant un temps limité, et indique une marge d'utilisation des moteurs qui correspond à la marge de puissance ou de couple disponible par rapport à cette limite. De tels dispositifs sont par exemple décrits dans les documents FR2749545 et FR2756256. On parle alors d'Instrument de Première Limitation. Cette limitation de puissance ou de couple est fonction à la fois de paramètres de fonctionnement du ou des moteurs et des conditions de vol.

En cas de panne de cet Instrument de Première Limitation, certains aéronefs à voilure tournante utilisent un marquage sur la commande de pas collectif. Ce marquage indique au pilote une zone sécurisée, c'est-à-dire une zone dans laquelle il peut évoluer sans risque de dépasser la limite d'utilisation du ou des moteurs de l'aéronef. Mais dans ce cas, le pilote n'a aucune vision réaliste de la marge de puissance ou de couple disponible au niveau du ou des moteurs en fonction des différentes conditions de vol.

Par principe, afin de respecter les contraintes réglementaires imposées pour toute fonction critique de pilotage de l'aéronef, un instrument de secours doit garantir une indépendance vis-à-vis de l'instrument principal correspondant et palier ainsi les erreurs communes de conception ou de production. En effet, l'indépendance de l'instrument de secours garantit que la panne du système principal n'affectera pas directement cet instrument de secours. On entend par panne tout comportement qui n'est pas conforme aux attentes de la fonction. La dissimilitude, qui consiste à utiliser pour l'instrument de secours des composants différents des composants constituant le système principal, diminue les risques que la panne affectant le système principal affecte également l'instrument de secours et contribue donc ainsi à cette indépendance de l'instrument de secours vis-à-vis de l'instrument principal. Ces différences peuvent par exemple être des capteurs utilisant une solution technique différente, des moyens de calcul avec une architecture différente.

Ces différents instruments de secours, qui assurent différentes fonctions, peuvent aujourd'hui se trouver sur un même aéronef, mais restent totalement indépendants les uns des autres. De fait, chaque système comporte ces propres capteurs ainsi qu'un ou plusieurs moyens de calcul spécifiques.

On connait le document US3752420 qui décrit un système utilisé dans un pilote automatique afin de stabiliser le comportement de l'aéronef notamment vis-à-vis du mouvement de tangage de l'aéronef. En effet, ce système utilise les informations issues de deux capteurs inertiels différents fournissant des informations sur la position et la vitesse autour de l'axe de tangage. Il filtre ces informations, puis fournit un signal permettant notamment la stabilisation de l'aéronef par l'intermédiaire du pilote automatique. Ce système est également capable de détecter une erreur dans les informations fournies par un des capteurs et adapte alors la loi de pilotage du pilote automatique afin de conserver un comportement stable de l'aéronef.

Le document FR2784457 décrit des instruments de secours comprenant des capteurs de pression et inertiels, ainsi que des chaînes de mesure électronique et un moyen de calcul. Ces instruments de secours sont ainsi capables, lors d'une panne d'un système d'information principal, de donner des informations critiques au pilote, c'est-à-dire la vitesse d'avancement de l'aéronef, son altitude et ses assiettes, en intégrant des corrections afin d'améliorer la précision de ces informations. Notamment, à partir des informations des capteurs, ce système est capable de déterminer l'incidence aérodynamique de l'aéronef ainsi que le nombre de Mach et d'en déduire un facteur de correction permettant alors d'améliorer la précision des informations critiques.

De plus, le document FR2855303 décrit un dispositif d'affichage de secours capable, lors d'une panne du dispositif d'affichage principal de fournir différentes informations en fonction du choix du pilote. En effet, trois configurations sont possibles. Dans un premier cas, uniquement des informations de pilotage, telles que la vitesse d'avancement de l'aéronef, son altitude et ses assiettes, sont affichées sur un écran. Dans un second cas, uniquement des informations de navigation, telles que le cap de l'aéronef et sa position par rapport à une route théorique, sont fournies au pilote. Enfin dans un troisième cas, l'écran affiche à la fois les informations de pilotage et les informations de navigation.

On connait également le document FR2903787 qui décrit un dispositif de secours fournissant, en cas de panne d'un dispositif principal, les informations critiques de vitesse d'avancement, altitude et assiettes au pilote de l'aéronef. Ce dispositif intègre classiquement des capteurs de mesure d'inertie et de pression, ainsi que des moyens de calcul et d'affichage. La particularité de ce dispositif réside dans son mode d'affichage, qui appartient à un système de vision dit « tête haute ».

En outre, le document FR2919066 décrit un instrument de secours fournissant, en cas de panne d'un dispositif principal, les informations critiques de vitesse d'avancement, altitude et assiettes au pilote de l'aéronef. Cet instrument de secours intègre classiquement des capteurs de mesure d'inertie et de pression, ainsi que des moyens de calcul et un moyen d'affichage. Là encore, le mode d'affichage choisi est un système de vision tête haute, mais la particularité de cet instrument réside dans l'affichage d'un vecteur vitesse de l'aéronef. En effet, les moyens de calcul sont capables de déterminer ce vecteur vitesse à partir des seules informations des capteurs de mesure d'inertie et de pression.

On connait aussi le document US 2007/164166 décrit un instrument de secours capable de suppléer un instrument de contrôle primaire de vol d'un aéronef. Cet instrument de secours comporte notamment un ou plusieurs capteurs, un moyen de calcul et un moyen de transmission d'information. De plus, cet instrument de secours et relié aux actionneurs de vol de l'aéronef. En cas de panne de l'instrument de contrôle primaire de vol, l'instrument des secours permet de commander ces actionneurs de vol et ainsi, que l'aéronef poursuive son vol en sécurité.

Le document FR 2924213 décrit un instrument de secours comportant des capteurs, des moyens de traitement des mesures de ces capteurs, des moyens de gestion de radiocommunication et un écran d'affichage. Cet instrument de secours peut ainsi afficher d'une part des informations primaires et critique de vol et d'autre part des données de radiocommunication et/ de radionavigation.

Enfin, le document EP 2301844 décrit un procédé et un dispositif d'aide au pilotage pour un aéronef muni d'au moins deux moteurs. Ce procédé et ce dispositif d'aide au pilotage permet, en cas de panne d'un indicateur de première limitation, de maintenir chaque paramètre de surveillance des moteurs en dessous d'un seuil prédéterminé.

La présente invention a alors pour objet de proposer un instrument de secours combinant, au sein d'un même instrument, la fourniture de différentes informations, les informations critiques ou importantes de vol nécessaires au pilote ainsi que des informations de limitation de la puissance ou de couple du ou des moteurs de l'aéronef. Cet instrument de secours fournit également une assistance au pilotage en cas de panne d'un pilote automatique.

L'invention vise un instrument de secours pour aéronef, comprenant au moins un capteur inertiel et au moins un capteur de pression ainsi qu'un moyen de calcul auquel sont reliés les capteurs inertiels et de pression. Ce moyen de calcul est capable de déterminer, à partir des mesures des capteurs inertiels et de pression, des informations critiques de vol de l'aéronef, c'est-à-dire la vitesse d'avancement de l'aéronef, son altitude et ses assiettes.

Cet instrument de secours comprend également une mémoire reliée au moyen de calcul et une unité de visualisation capable d'afficher ces informations critiques de vol en cas de panne d'un système d'information principal de l'aéronef, permettant ainsi au pilote de continuer de piloter l'aéronef en toute sécurité.

Selon l'invention, l'instrument de secours intègre un dispositif d'assistance au pilotage, via des actionneurs du pilote automatique de l'aéronef.

Cet instrument de secours est remarquable en ce qu'il est capable, en combinant les informations de vitesse d'avancement et d'assiettes avec des lois de stabilisation présentes dans la mémoire de l'instrument de secours, de déterminer des lois de commande afin de piloter directement les actionneurs du pilote automatique en cas de panne du ou des calculateurs de ce pilote automatique.

En effet, le moyen de calcul de l'instrument de secours détermine la vitesse d'avancement de l'aéronef et ses assiettes grâce aux mesures des capteurs inertiels et de pression. En introduisant ces informations de vitesse air, de vitesses angulaires et d'assiettes dans les lois de stabilisation présentes dans la mémoire de l'instrument de secours, le moyen de calcul est alors capable de déterminer les lois de commandes à fournir aux actionneurs du pilote automatique afin de stabiliser l'aéronef en vol rectiligne comme en virage.

Les lois de stabilisation sont des fonctions mathématiques associant une ou plusieurs entrées de ce calculateur à une ou plusieurs lois de commandes des actionneurs reliés aux sorties de ce calculateur. Le plus fréquemment, c'est-à-dire en situation de perturbations d'amplitude faible, une telle fonction mathématique montre un comportement linéaire et peut donc être complètement caractérisée par une fonction de transfert dans le domaine fréquentiel.

Un comportement linéaire signifie que si la fonction mathématique transforme une entrée *u*, fonction du temps et notée *u(t)*, en une sortie *x*, qui est également fonction du temps et notée *x(t)* et transforme une entrée *v*, fonction du temps et notée *v(t)*, en une sortie *y*, qui est également fonction du temps et notée *y(t)* alors toute combinaison linéaire des entrées *u* et *v*, exprimée sous la forme générale *a.u(t)* + *b.v(t)* est transformée en la combinaison linéaire des sorties *a.x(t)* + *b.y(t)*, *a* et *b* étant des coefficients constants.

Par contre, une entrée sinusoïdale ayant une fréquence donnée est transformée par une loi mathématique linéaire en une sortie sinusoïdale de même fréquence, mais avec un rapport d'amplitude et un déphasage entre les deux sinusoïdes qui est variable suivant cette fréquence. La fonction complexe décrivant ce rapport d'amplitude et ce déphasage sur toute la plage de fréquence est appelée ici fonction de transfert. Ainsi, à toute loi de stabilisation peut être associée une fonction de transfert.

Disposant d'une sortie qui peut être reliée aux actionneurs du pilote automatique, le moyen de calcul pilote alors ces actionneurs selon les lois de commande déterminées.

L'instrument de secours permet ainsi d'assurer une stabilisation en tangage, roulis et lacet de l'aéronef malgré une panne du ou des calculateurs du pilote automatique.

Le moyen de calcul dispose également d'au moins une entrée reliée à au moins un calculateur moteur présent dans l'aéronef. Ce type de calculateur moteur, désigné traditionnellement par les initiales de son équivalence en langue anglaise, c'est-à-dire FADEC pour « Full Authority Digital Engine Control », est présent sur de nombreux appareils pour contrôler le fonctionnement d'un ou des turbomoteurs. Le terme FADEC sera utilisé dans la suite de la description pour désigner un tel calculateur moteur.

Ce FADEC calcule, en prenant en compte les conditions de vol et à partir de diverses informations issues du fonctionnement du ou des moteurs de l'aéronef et de leur environnement, une première limite d'utilisation de ce ou ces moteurs ainsi que la marge de puissance ou de couple disponible par rapport à cette première limite d'utilisation. En fonctionnement normal, un Instrument de Première Limitation informe le pilote, par l'intermédiaire d'un écran de visualisation, de la valeur de cette première limite d'utilisation et de la marge de puissance ou de couple disponible par rapport à cette première limite.

Il est à noter que la détermination de cette première limite d'utilisation et de la marge de puissance ou de couple correspondante peut être réalisée en appliquant des méthodes connues. Par exemple, on peut notamment se référer aux documents FR 2749545 et FR 2756256.

Cet instrument de secours est alors capable, par l'intermédiaire du FADEC, d'afficher une information de cette première limite d'utilisation du ou des moteurs lors de la panne de l'Instrument de Première Limitation et de l'afficher sur l'unité de visualisation de l'instrument de secours.

En effet, le FADEC calcule cette première limite d'utilisation et la marge de puissance ou de couple disponible correspondante, puis fournit ces informations au moyen de calcul qui peut alors l'afficher sur l'unité de visualisation.

Dans un mode de réalisation de l'invention, le FADEC fournit les informations de fonctionnement d'un ou des moteurs de l'aéronef et de leur environnement au moyen de calcul de l'instrument de secours. Le moyen de calcul détermine ensuite, à partir d'un algorithme dédié présent dans la mémoire de l'instrument de secours, cette première limite d'utilisation et la marge de puissance ou de couple disponible correspondante.

De fait, le pilote est informé, par l'intermédiaire de l'unité de visualisation de cet instrument de secours et malgré la panne du système d'information principal, à la fois des informations critiques de vol et de la marge d'utilisation du ou des moteurs qui correspond à la marge de puissance ou de couple disponible au niveau du ou des moteurs par rapport à la première limite d'utilisation. Le pilote peut alors manoeuvrer l'aéronef en toute sécurité.

Un tel instrument de secours selon l'invention améliore donc notablement la sécurité de vol lors d'une panne d'un ou plusieurs instruments. Notamment, un tel instrument de secours peut suppléer, lors d'une panne, le système d'information principal de l'aéronef, son pilote automatique et/ou son Instrument de Première Limitation, ces trois instruments étant distincts.

En effet, le pilote visualise, sur l'unité de visualisation, en plus des informations critiques de vol, la première limite d'utilisation du ou des moteurs de l'aéronef et la marge de puissance ou de couple disponible. Ces informations permettent au pilote de ne pas dépasser cette limite d'utilisation ou tout au moins de le faire en connaissance de cause. Il peut ainsi limiter ce dépassement à un temps réduit conforme aux exigences de l'aéronef.

Un dépassement de cette limite d'utilisation, sur une durée trop importante, entraînerait au minimum des opérations de maintenance supplémentaires, voire des dégradations de ce ou ces moteurs. Dans les deux cas, il en résulterait des coûts supplémentaires pour l'entretien de l'aéronef.

A contrario, avec un instrument de secours traditionnel, le pilote doit estimer, en permanence et par lui-même, la marge de puissance ou de couple disponible en fonction des conditions de vol, que l'aéronef soit équipé ou non d'un marquage sur le pas collectif indiquant une zone sécurisée. Une part de son attention est donc utilisée pour estimer cette marge de puissance ou de couple au détriment du vol lui-même.

De plus, l'aéronef garde un comportement stable malgré la panne du pilote automatique grâce à la fonction de stabilisation intégrée dans l'instrument de secours.

De fait, l'instrument de secours selon l'invention combine la mise à disposition du pilote des informations critiques de vol, des informations sur la première limitation du ou des moteurs et de la marge de puissance ou de couple disponible ainsi que la fonction de stabilisation en assiettes et lacet de l'aéronef. Il constitue alors un ensemble complet intégrant les fonctions essentielles à la sécurité de l'aéronef.

Le regroupement de ces fonctions dans un seul instrument facilite alors son intégration dans le cockpit de l'aéronef. De même, son ergonomie d'utilisation est améliorée, le pilote retrouvant toutes les informations nécessaires au sein d'un même instrument.

De plus, les ressources de cet instrument de secours, que ce soit en termes de capteurs ou de moyen de calcul, sont partagées pour les trois fonctions, minimisant aussi bien leurs coûts que leurs masses et leurs encombrements dans le cockpit de l'aéronef.

Enfin, cet instrument de secours est totalement indépendant des instruments principaux de l'aéronef. La dissimilitude vis-à-vis de ces instruments principaux est également assurée en utilisant des capteurs, un moyen de calcul et une unité de visualisation différents de ces instruments principaux.

Le dispositif peut de plus comporter une ou plusieurs caractéristiques supplémentaires.

Selon une variante de l'invention, le moyen de calcul est capable de prévoir les valeurs moyennes de vitesses angulaires de tangage et de lacet en virages coordonnés de l'aéronef.

En effet, grâce aux mesures réalisées par les capteurs inertiels et de pression contenus dans l'instrument de secours, le moyen de calcul est capable de déterminer, comme il a été déjà évoqué, la vitesse d'avancement de l'aéronef et ses assiettes.

Plus précisément, le moyen de calcul est capable de déterminer :

- la composante longitudinale $U$ de la vitesse d'avancement de l'aéronef,

- la composante latérale $V$ de la vitesse air,

- la composante verticale $W$ de la vitesse air,

- la vitesse angulaire de roulis $p$,

- la vitesse angulaire de tangage $q$,

- la vitesse angulaire de lacet $r$,

- l'assiette de roulis $\varphi$,

- l'assiette de tangage $\theta$,

Le moyen de calcul comporte des instructions permettant de déterminer les vitesses angulaires moyennes en roulis, tangage et lacet en virage coordonné à partir de ces données.

Dans ces conditions, on connait l'équation de la dérivée de l'assiette de roulis : $\dot{\varphi}=p+\tan\theta\cdot(q\sin\varphi+r\cos\varphi)$.

Lors d'un virage coordonné, cette dérivée est nulle. On en déduit une vitesse angulaire moyenne de roulis $p_{Avr}$ quand $\dot{\varphi}=0$ :

$$p_{Avr} = -\tan\theta\cdot\left(q\sin\varphi + r\cos\varphi\right).$$

On connait également l'équation de la dérivée de la composante latérale de la vitesse air $V$ :

$\dot{V} = -rU + pW + g\cdot(N_y + \cos\theta\sin\varphi)$ où $N_y$ est le facteur de charge latéral, $g$ l'accélération de la gravité.

Un virage est dit coordonné, lorsqu'il est réalisé sans facteur de charge latéral ($N_y$ =0) et sans variation du dérapage ($\dot{V}$ =0). On obtient ainsi : $0 = -rU + pW + g\cdot\cos\theta\sin\varphi$.

De plus, en virage coordonné, $p$ et $W$ ayant de faibles valeurs, leur produit $pW$ peut être négligé et $cos\theta$ peut

être approximé par 1 car θ est faible. On en déduit la vitesse angulaire moyenne de lacet : $r_{Avr} = \dfrac{g}{U} \sin \varphi$.

On connait par ailleurs l'équation de la dérivée de l'assiette de tangage : $\dot{\theta} = q\cos\varphi - r\sin\varphi$.

Lors d'un virage coordonné, cette dérivée est nulle. On en déduit une vitesse angulaire moyenne de tangage $q_{Avr}$ quand $\dot{\theta} = 0$ : $q_{Avr} = r\tan\varphi$.

En virage coordonné, $r$ peut être remplacé par sa valeur moyenne soit $r_{Avr} = \dfrac{g}{U} \sin \varphi$. On obtient alors : $q_{Avr} = \dfrac{g}{U} \sin \varphi \tan \varphi$.

Finalement, on obtient les formules suivantes déterminant les valeurs moyennes des vitesses angulaires de roulis, tangage et lacet en virage coordonné :

$$p_{Avr} = -\tan \theta \cdot \left( q \sin \varphi + r \cos \varphi \right)$$

$$r_{Avr} = \frac{g}{U} \sin \varphi$$

$$q_{Avr} = \frac{g}{U} \sin \varphi \tan \varphi$$

Ces vitesses angulaires moyennes en virage coordonné sont alors déterminées et prises en compte par le moyen de calcul par soustraction respective aux valeurs courantes des vitesses angulaires pour établir, à partir des lois de stabilisation intégrées dans la mémoire de l'instrument de secours, les lois de commande en stabilisation des actionneurs du pilote automatique. L'introduction de ces vitesses angulaires moyennes dans l'établissement des lois de commande permet de renforcer l'effet stabilisant obtenu.

En effet, en prenant en compte ces vitesses angulaires moyennes, il devient possible de choisir une loi de stabilisation dont la fonction de transfert, évoquée précédemment, montre un module élevé vers les basses fréquences. Ce module, également désigné par le terme « gain », permet ainsi d'améliorer l'efficacité et la réactivité des lois de commande afin de contrer les tendances à dériver de l'aéronef.

De plus, sans la prise en compte de ces vitesses angulaires moyennes, chaque mise en virage se traduit par l'apparition d'une vitesse angulaire moyenne non nulle. De fait, avec un module élevé vers ces basses fréquences, les lois de commande tendraient à s'opposer à cette valeur moyenne, entraînant alors une réaction de l'aéronef contraire à l'intention du pilote.

Là encore, cette amélioration de la stabilisation de l'aéronef se fait sans modification de l'instrument de secours, c'est-à-dire sans effet sur sa masse et son encombrement, les ressources existantes dans l'instrument de secours étant suffisantes.

Pour déterminer ces valeurs moyennes, des instructions correspondantes aux formules définies précédemment sont stockées dans la mémoire de l'instrument de secours.

Selon un mode de réalisation de l'invention, l'instrument de secours comporte au moins un bloc de filtrage. Ce bloc de filtrage permet essentiellement de filtrer les informations issues des capteurs inertiels ou de pression afin par exemple de supprimer certaines fréquences de ces mesures ou d'atténuer l'effet de perturbations extérieures sur ces mesures.

Par exemple, l'instrument de secours comporte une série de filtres à encoche, qui permet de supprimer les perturbations dues à la rotation du rotor principal de l'aéronef, notamment à hautes fréquences. En effet, les vibrations correspondant aux fréquences harmoniques de la fréquence de rotation de ce rotor sont mesurées par les capteurs inertiels de l'instrument de secours, et seraient donc susceptibles de se propager jusqu'aux commandes des actionneurs du pilote automatique si elles n'étaient pas filtrées.

Un filtre à encoche, qui peut également être désigné par les termes filtre coupe-bande ou filtre réjecteur de bande, est un filtre empêchant le passage d'un intervalle de fréquences.

En complément de cette série de filtres à encoche destinés à éliminer des raies de fréquences connues pour être perturbées par les vibrations provenant de la rotation du rotor principal, des bruits et perturbations à hautes fréquences sont aussi susceptibles d'être mesurés. Occupant une bande de fréquence élargie vers les hautes fréquences, il est préférable de les filtrer au moyen d'un filtre passe-bas.

Un filtre passe-bas est un filtre qui laisse passer les basses fréquences c'est-à-dire en dessous d'une fréquence appelée fréquence de coupure et qui atténue ou supprime les hautes fréquences, c'est-à-dire les fréquences supérieures à la fréquence de coupure.

Grâce à ces filtres, les mesures des capteurs inertiels et de pression peuvent alors être utilisées sans crainte de propagation de bruit de mesure excessif ou de vibrations indésirables.

En aval de ces filtres, la loi de stabilisation elle-même diffère potentiellement selon chaque axe de chaque type d'aéronef qui impose sa propre fonction de transfert. Pour pouvoir s'adapter à différents aéronefs il est donc nécessaire de prévoir des filtres de structure générale et aisément configurable.

Chaque bloc de filtrage peut donc se composer de plusieurs types de filtres, par exemple un filtre passe-bas ainsi qu'un ou plusieurs filtres à encoche, voire contenir des filtres de structure générale. De plus, différents blocs de filtrage peuvent être appliqués à l'ensemble des mesures des capteurs inertiels ou de pression ou bien à une mesure spécifique, telle que la mesure de la vitesse angulaire de lacet par exemple.

Une fois filtrées, les données en entrée de l'instrument de secours peuvent alors être soit émises à destination d'autres systèmes connectés à cet instrument de secours, soit utilisées, par exemple par le moyen de calcul de l'instrument de secours, pour leur appliquer une loi de stabilisation sans retrouver dans les lois de commande calculées de composantes indésirables telles que les fréquences liées à la rotation du rotor principal.

Selon un autre mode de réalisation de l'invention, l'instrument de secours intègre un logiciel paramétrable. En effet, les blocs de filtrage, qui sont contenus dans l'instrument de secours, doivent être adaptés à chaque aéronef.

Ainsi, chaque filtre, contenu dans les blocs de filtrage, est défini par une ou plusieurs caractéristiques, permettant par exemple de modifier la bande passante autorisée par le filtre ou la largeur de cette bande passante. Un tel logiciel paramétrable est alors capable de modifier ces caractéristiques selon l'aéronef sur lequel l'instrument de secours est installé.

Pour cela, cet instrument de secours intègre des fichiers de paramètres, chaque fichier correspondant à un type d'aéronef. Les caractéristiques à appliquer aux différents filtres sont ainsi intégrés dans le fichier de paramètres de l'aéronef correspondant.

De plus, la structure des lois de stabilisation est commune à l'ensemble des aéronefs, mais des coefficients spécifiques à chaque aéronef, sur lequel est utilisé l'instrument de secours, doivent être appliqués dans ces lois de stabilisation pour adapter chacune de leurs fonctions de transfert. Les fichiers de paramètres intègrent également ces coefficients des lois de stabilisation.

Le logiciel paramétrable et le fichier des paramètres sont stockés dans la mémoire de l'instrument de secours. De fait, l'instrument de secours adapte automatiquement les coefficients des lois de stabilisation et les caractéristiques des différents filtres contenus dans les blocs de filtrage à l'aéronef sur lequel l'instrument de secours est installé.

En conséquence, un unique instrument de secours est utilisable sur différents aéronefs, ce qui permet de réduire le coût de cet instrument, aussi bien au niveau de la fabrication que de la maintenance et de la gestion des pièces de rechange.

De plus, l'instrument de secours s'adapte très simplement à un nouvel aéronef ou à des modifications d'un aéronef existant. En effet, il suffit de charger le fichier de paramètres correspondant au nouvel appareil dans la mémoire de l'instrument de secours.

Selon un mode de réalisation préféré de l'invention, le moyen de calcul se décompose en deux modules de calcul. Un premier module de calcul détermine tout d'abord, au cours d'un premier cycle, les caractéristiques à appliquer aux différents filtres composant les blocs de filtrage et les coefficients à appliquer aux lois de stabilisation. Ensuite, un second module de calcul détermine les lois de commande en stabilisation pilotant les actionneurs du pilote automatique lors de chaque cycle suivant. Ce choix permet d'alléger ainsi la charge de calcul de chaque cycle.

Dans ce mode de réalisation préféré, l'instrument de secours intègre trois blocs de filtrage, un premier bloc de filtrage chargé de l'atténuation des effets communs à tous les capteurs, tels que ceux provenant de la rotation du rotor principal, un second bloc de filtrage chargé de filtrer les modes de résonance propres à chacun des trois axes de roulis, de tangage et de lacet et un troisième bloc de filtrage chargé des filtrages des vitesses angulaires spécifiques aux calculs des lois de commande de pilotage de chaque axe.

Au cours d'un premier cycle suivant la mise sous tension de l'instrument de secours, le premier module de calcul détermine les caractéristiques à appliquer aux différents filtres et les coefficients à appliquer aux lois de stabilisation intégrées à cet instrument de secours en fonction de l'aéronef sur lequel l'instrument de secours est installé. Pour cela, le moyen de calcul utilise le logiciel paramétrable contenu dans la mémoire de l'instrument de secours en lien avec le fichier de paramètres correspondant à l'aéronef.

Par la suite, au cours de chaque cycle suivant, l'instrument de secours appelle un second module de calcul, pour disposer à tout instant de lois de commande applicables aux actionneurs, suite à une éventuelle panne du ou des calculateurs du pilote automatique.

Pour cela, les mesures issues des capteurs inertiels et de pression sont tout d'abord filtrées par les blocs de filtrage dont les différents filtres sont affectés des caractéristiques déterminées au cours du premier cycle. Ensuite, les vitesses angulaires moyennes suivant les axes de roulis, de tangage et de lacet sont déterminées grâce aux instructions présentes dans la mémoire de l'instrument de secours. Enfin, les lois de commande, permettant de stabiliser l'aéronef, sont déterminées à partir des lois de stabilisation stockées également dans la mémoire de l'instrument de secours.

Selon un autre mode de réalisation, l'instrument de secours permet de déterminer la fréquence de rotation du rotor principal. Il a été évoqué précédemment que les blocs de filtrage étaient capables de supprimer d'une mesure donnée l'effet des vibrations générées par la rotation du rotor principal de l'aéronef. Inversement, il est également possible d'isoler ces vibrations et de les utiliser afin de déterminer la fréquence de rotation du rotor principal.

En effet, la rotation du rotor principal provoque inévitablement des vibrations se propageant dans tout l'aéronef et mesurées par tout capteur inertiel, qu'il s'agisse par exemple de mesures de vitesse angulaire ou bien de facteur de charge. Ces mesures comportent donc une raie à la fréquence de rotation du rotor ainsi qu'à chacun de ses principaux harmoniques. Cette rotation du rotor principal provoque également des variations de pression dynamique à chaque passage de pale au-dessus des capteurs de pression. Il est alors possible, grâce au moyen de calcul disponible dans l'instrument de secours d'analyser l'ensemble des mesures disponibles et d'extraire parmi les plus pertinentes la fréquence de rotation du rotor principal. Cette information peut alors être affichée sur l'unité de visualisation de l'instrument de secours et visible par le pilote.

Dans un premier mode de réalisation de cette estimation de la fréquence de rotation du rotor principal, une Transformée de Fourier Rapide sur une fenêtre glissante peut être appliquée à la mesure ou à la combinaison de mesures la plus pertinente. Par contre, afin d'obtenir une bonne résolution fréquentielle, il faut utiliser une fenêtre temporelle comportant un grand nombre de points, avec pour conséquence un retard de mesure et une exigence de capacité de calcul élevée.

Dans un second mode de réalisation de cette estimation de la fréquence de rotation du rotor principal, un premier filtre passe-bande peut au préalable isoler la bande de fréquence dans laquelle la rotation du rotor principal est susceptible de varier, puis effectuer une détection de la succession des crêtes du signal issu de ce filtre. La durée entre deux crêtes positives ou entre deux crêtes négatives, ou plus généralement une moyenne pondérée des durées entre les crêtes positives et des durées entre les crêtes négatives récemment détectées permet d'estimer la période de rotation du rotor, et par suite de déterminer par inversion sa fréquence. Par contre, pour éviter les crêtes parasites susceptibles de fausser cette estimation, il est nécessaire d'augmenter la sélectivité du filtre et donc d'augmenter son retard de réponse en cas de variation de la fréquence de rotation. De plus, pour stabiliser le résultat de cette estimation, il est nécessaire soit d'effectuer une moyenne sur un nombre suffisant de périodes brutes, soit d'effectuer un filtrage passe-bas sur les périodes brutes, ce qui dans les deux cas conduit à introduire un retard de cette estimation indésirable.

Selon un troisième mode de réalisation de cette estimation de la fréquence de rotation du rotor principal, un premier filtre passe-bande peut au préalable isoler la bande de fréquence dans laquelle la rotation du rotor principal est susceptible de varier, et d'appliquer un mécanisme de démodulation par verrouillage de phase désigné en langue anglaise « Phase Locked Loop » ou PLL pour faire coïncider une sinusoïde générée par le moyen de calcul avec la composante principale du signal issu du premier filtre passe-bande. Cette technique, habituellement réservée aux démodulations de signaux de radio-fréquence, présente l'avantage d'une bonne robustesse aux bruits de mesures et de détections de vibrations parasites, d'une capacité à suivre les variations de la fréquence rotor au prix d'un retard acceptable et d'une simplicité de mise en oeuvre qui épargne la capacité de calcul de l'instrument de secours. La mise en oeuvre de cette estimation procède selon les étapes suivantes :

1) calcul de la combinaison de mesures reflétant le mieux la vibration liée à la fréquence de rotation du rotor principal

2) filtrage passe-bande du résultat de la combinaison des mesures précédemment mentionnée. La sélectivité de ce filtre est choisie selon un critère d'optimisation. En effet, plus cette sélectivité est faible, plus la bande passante de la boucle de poursuite par verrouillage de phase devra être basse, et plus la sélectivité de ce filtre est forte, plus la bande passante de la boucle de poursuite pourra être élevée,

3) filtrage passe-bas de la valeur absolue du signal issu du filtre passe-bande et division de ce signal par sa valeur absolue filtrée afin de le normaliser, c'est-à-dire s'affranchir des fluctuations d'amplitude de son enveloppe. Ce signal normalisé est donc de la forme $A\,cos(\omega t+\varphi)+\varepsilon$ où le module $A$ est rendu peu variable par la normalisation et $\varepsilon$ représente les bruits parasites,

4) calcul de deux sinusoïdes en quadrature $sin(\omega_0 t)$ et $cos(\omega_0 t)$ selon une fréquence $f_0$ telle que $\omega_0 = 2\pi f_0$ déterminée par la boucle décrite ci-dessous,

5) multiplication de chacune de ces sinusoïdes par le signal normalisé donnant alors un premier signal proportionnel à

$$S1 = sin[(\omega + \omega_0)t + \varphi] - sin[(\omega - \omega_0)t + \varphi]$$

et un second signal proportionnel à

$$S2 = cos[(\omega + \omega_0)t + \varphi] + cos[(\omega - \omega_0)t + \varphi]$$

6) calcul de la dérivée de chacun des deux signaux S1 et S2 :

$$S1' = (\omega + \omega_0) \cdot cos[(\omega + \omega_0)t + \varphi] - (\omega - \omega_0) \cdot cos[(\omega - \omega_0)t + \varphi]$$

et

$$S2' = -(\omega + \omega_0) \cdot sin[(\omega + \omega_0)t + \varphi] - (\omega - \omega_0) \cdot sin[(\omega - \omega_0)t + \varphi]$$

7) extraction des composantes basses fréquences des signaux *S1, S2, S1'* et *S2'* par filtrage passe-bas, donnant respectivement les signaux *LpS1, LpS2, LpS1'* et *LpS2'*,

8) recombinaison de ces quatre signaux selon la formule *LpS1 x LpS2' - LpS2 x LpS1'* pour obtenir un signal en

$$(\omega - \omega_0) \cdot sin^2[(\omega - \omega_0)t + \varphi] + (\omega - \omega_0) \cdot cos^2[(\omega - \omega_0)t + \varphi] + HF$$

où *HF* désigne des termes hautes fréquences. Ce signal comprend donc un terme en $(\omega - \omega_0)$ et des termes hautes fréquences,

9) application d'un gain approprié au signal issu de cette recombinaison et intégration pour donner $f_0$. Cette intégration agit comme un filtre passe-bas éliminant les composantes hautes fréquences. La boucle complète se ramène à un calcul d'écart $(\omega - \omega_0)$ suivi de l'application d'un gain et d'un intégrateur pur, ce qui constitue le schéma classique d'une boucle passe-bas du premier ordre.

Dans un autre mode de réalisation de l'invention, l'instrument de secours est relié à au moins un dispositif de localisation, qui détermine un écart de l'aéronef par rapport à une trajectoire prédéterminée que doit suivre l'aéronef.

En effet, il est intéressant de fournir au pilote l'information de cet écart par rapport à une trajectoire prédéterminée de l'aéronef, même en cas de panne du système principal d'affichage. Pour cela, un dispositif de localisation peut être relié à l'instrument de secours. Ce système peut, par exemple, être de type des balises fréquemment utilisées dans ce type d'aéronef.

De plus, l'instrument de secours est capable d'afficher, sur l'unité de visualisation, cet écart par rapport à la trajectoire prédéterminée à suivre.

De fait, le pilote visualise cet écart de l'aéronef par rapport à la trajectoire prédéterminée qu'il doit suivre. Cette information est un élément de sécurité supplémentaire pour le pilote, notamment dans des phases particulières de vol telles que les phases d'approche finale et d'atterrissage.

L'unité de visualisation de l'instrument de secours, selon un mode de réalisation de l'invention, reprend à l'identique la représentation de l'unité d'affichage principale. En effet, l'unité de visualisation de l'instrument de secours peut utiliser une interface homme-machine identique à celle de l'affichage du système d'information principal. Le pilote retrouve ainsi un écran identique à celui qu'il connait en temps normal et peut alors retrouver rapidement les informations dont il a besoin, malgré la panne du système d'information principal.

La présente invention a aussi pour objet le procédé de fonctionnement d'un instrument de secours pour aéronef.

Un tel instrument comprend au moins un capteur inertiel et au moins un capteur de pression et un moyen de calcul auquel sont reliés lesdits capteurs inertiels et de pression. Ce moyen de calcul comporte également au moins une entrée apte à être reliée à au moins un FADEC et au moins une sortie apte à être reliée à des actionneurs d'un pilote automatique. L'instrument de secours comporte une mémoire et une unité de visualisation reliées au moyen de calcul.

Pour la réalisation de ce procédé, les étapes suivantes sont réalisées :

- on mesure des données de vol par l'intermédiaire des capteurs inertiels et de pression,

- on détermine, par l'intermédiaire du moyen de calcul, des informations critiques de vol, c'est-à-dire la vitesse d'avancement de l'aéronef, son altitude et ses assiettes,

- on affiche ces informations critiques de vol sur l'unité de visualisation,

- on détermine des lois de commande en stabilisation par l'intermédiaire de lois de stabilisation intégrées dans la mémoire de l'instrument de secours

- on pilote selon les lois de commande les actionneurs du pilote automatique de l'aéronef en cas de panne de ce pilote automatique, afin d'assurer la stabilisation de l'aéronef,

- on mesure des informations de fonctionnement d'un ou des moteurs dudit aéronef et de leur environnement par l'intermédiaire d'au moins un FADEC.

- on détermine une première limite d'utilisation du ou des moteurs ainsi qu'une marge de puissance ou de couple disponible par rapport à cette première limite d'utilisation,

- on affiche ladite première limite d'utilisation et ladite marge de puissance ou de couple disponible sur l'unité de visualisation.

Afin de déterminer la première limite d'utilisation du ou des moteurs et la marge de puissance ou de couple disponible correspondante, au moins deux variantes sont possibles.

Selon une variante, le FADEC calcule cette première limite d'utilisation et la marge de puissance ou de couple disponible correspondante, puis fournit ces informations au moyen de calcul.

Selon une autre variante, le FADEC fournit les informations de fonctionnement d'un ou des moteurs de l'aéronef et de leur environnement au moyen de calcul, qui détermine ensuite, à partir d'un algorithme dédié présent dans la mémoire de l'instrument de secours cette première limite d'utilisation et la marge de puissance ou de couple disponible correspondante.

Dans d'autres modes de réalisation du procédé de l'invention, différentes étapes peuvent être intégrées dans le procédé de fonctionnement de l'instrument de secours.

Par exemple, le moyen de calcul détermine les valeurs moyennes des vitesses angulaires de roulis, de tangage et de lacet en virages coordonnés de l'aéronef. Ces vitesses angulaires moyennes sont ensuite utilisées par le moyen de calcul afin de déterminer lesdites lois de commande. Pour réaliser ce calcul, le moyen de calcul utilise des instructions présentes dans la mémoire de l'instrument de secours.

Cette étape supplémentaire permet de réduire les perturbations liées aux mises en virage et d'améliorer ainsi la réactivité de la stabilisation de l'aéronef.

Dans une autre étape, une pluralité de blocs de filtrage atténue certaines fréquences des mesures des capteurs inertiels et de pression et supprime des perturbations extérieures affectant ces mesures. Ces blocs de filtrage sont intégrés à l'instrument de secours.

Une étape supplémentaire peut être la détermination par le moyen de calcul d'une fréquence de rotation du rotor principal de l'aéronef, puis l'affichage de cette fréquence de rotation sur l'unité de visualisation.

Pour cela, un ou plusieurs blocs de filtrage isolent les perturbations générées par la rotation du rotor principal de l'aéronef. Ces perturbations étant liées à la fréquence de rotation de ce rotor, il est alors possible de déterminer cette fréquence de rotation du rotor principal.

Dans un autre exemple, l'instrument de secours est relié à au moins un dispositif de localisation, qui détermine un écart de l'aéronef par rapport à une trajectoire prédéterminée que doit suivre l'aéronef, et affiche cet écart sur l'unité de visualisation.

Le pilote visualise ainsi cet écart par rapport à la trajectoire prédéterminée qu'il doit suivre. Cette information est un élément de sécurité supplémentaire pour le pilote, notamment dans des phases particulières de vol telles que les phases d'approche finale et d'atterrissage.

L'invention et ses avantages apparaîtront avec plus de détails dans le cadre de la description qui suit avec des exemples de réalisation donnés à titre illustratif en référence aux figures annexées qui représentent :

- la figure 1, le schéma synoptique de l'instrument de secours selon l'invention, et

- la figure 2, le schéma synoptique d'un mode de réalisation de l'invention,

Les éléments présents dans plusieurs figures distinctes sont affectés d'une seule et même référence.

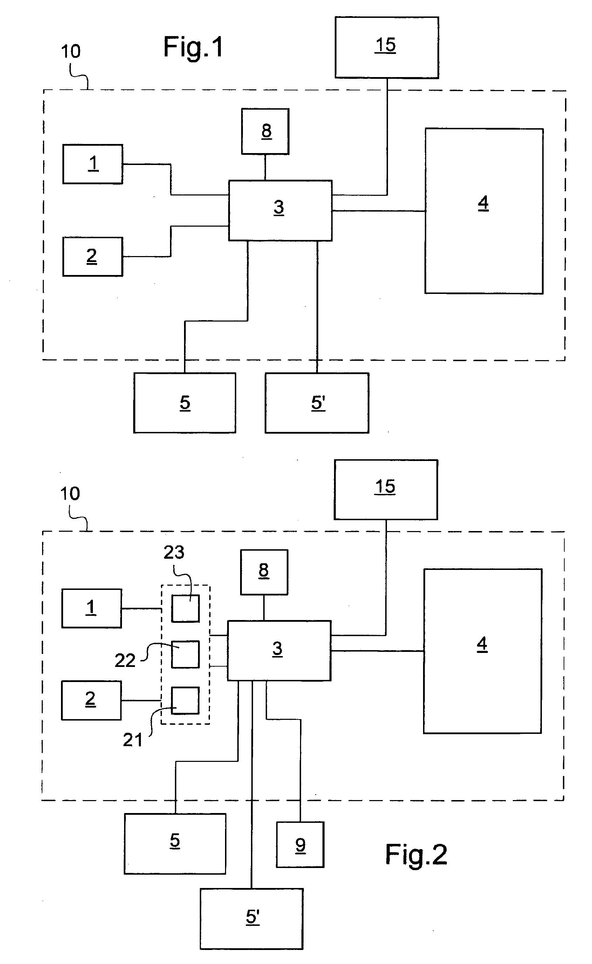

Sur la figure 1 est représenté un schéma synoptique d'un instrument de secours 10 selon l'invention. Cet instrument de secours 10 comprend au moins un capteur inertiel 1 et au moins un capteur de pression 2 ainsi qu'un moyen de calcul 3 auquel sont reliés les capteurs inertiel(s) 1 et de pression 2. Cet instrument de secours 10 comprend également une unité de visualisation 4 et une mémoire 8.

Ce moyen de calcul 3 est capable de déterminer, à partir des mesures des capteurs inertiel(s) 1 et de pression 2, des informations critiques de vol de l'aéronef, c'est-à-dire la vitesse d'avancement de l'aéronef, son altitude et ses assiettes. Ce moyen de calcul 3 est alors capable d'afficher, sur l'unité de visualisation 4, ces informations critiques de vol en cas de panne d'un système d'information principal de l'aéronef.

Le moyen de calcul 3 comporte deux entrées reliées à deux FADEC 5 et 5' présents dans l'aéronef. Ces FADEC 5 et 5' fournissent diverses informations issues du fonctionnement des moteurs de l'aéronef et de leur environnement à un Instrument de Première Limitation. Cet Instrument de Première Limitation fournit alors au pilote l'information d'une première limite d'utilisation des moteurs de l'aéronef ainsi qu'une marge de puissance disponible par rapport à cette première limite d'utilisation.

Cet instrument de secours 10 est capable, par l'intermédiaire des FADEC 5 et 5', d'afficher une information de la première limite d'utilisation des moteurs sur l'unité de visualisation lors de la panne de l'Instrument de Première Limitation.

En effet, le moyen de calcul 3 reçoit des informations fournies par les FADEC 5 et 5' sur la première limite d'utilisation des moteurs et la marge de puissance ou de couple disponible par rapport à cette première limite et les affiche sur l'unité de visualisation 4.

Dans un mode de réalisation de l'invention, le FADEC fournit les informations de fonctionnement d'un ou des moteurs de l'aéronef et de leur environnement au moyen de calcul 3. Le moyen de calcul 3 détermine ensuite, à partir d'un algorithme dédié présent dans la mémoire 8 de l'instrument de secours 10, cette première limite d'utilisation et la marge de puissance ou de couple disponible correspondante.

De fait, l'unité de visualisation 4 affiche, malgré la panne du système d'information principal, à la fois les informations critiques de vol de l'aéronef et la marge de puissance ou de couple disponible par rapport à cette première limite d'utilisation des moteurs. Le pilote peut ainsi continuer de manoeuvrer l'aéronef en toute sécurité.

Le moyen de calcul 3 de l'instrument de secours 10 selon l'invention comporte une sortie reliée à des actionneurs 15 d'un pilote automatique de l'aéronef. Le moyen de calcul 3 est alors capable de piloter ces actionneurs 15 afin d'assurer une stabilisation de l'aéronef.

En effet, le moyen de calcul 3 de l'instrument de secours, déterminant la vitesse de l'aéronef et ses assiettes, peut définir des lois de commande en appliquant ces informations à des lois de stabilisation présentes dans la mémoire 8 de l'instrument de secours 10. Ces lois de commande permettent alors de piloter directement les actionneurs du pilote automatique de l'aéronef en cas de panne de ce pilote automatique, afin d'assurer la stabilisation de l'aéronef.

Avantageusement, l'instrument de secours 10 ne comporte pas de ressource supplémentaire pour assurer cette fonction d'assistance au pilotage. En effet, les capteurs inertiel(s) 1 et de pression 2 ainsi que le moyen de calcul 3 sont partagés entre les fonctions fournissant les informations critiques de vol et les informations de marges de puissance et cette assistance au pilotage. Ainsi, l'ajout de cette fonction d'assistance au pilotage à l'instrument de secours est sans effet aussi bien en termes de coût que de masse et d'encombrement.

La figure 2 représente un schéma synoptique d'un mode de réalisation de l'invention.

L'instrument de secours 10 comporte trois blocs de filtrage, un premier bloc de filtrage 21 chargé de l'atténuation des effets de la rotation du rotor principal, un second bloc de filtrage 22 chargé de filtrer les modes de résonnance propres à chacun des axes de roulis, de tangage et de lacet ainsi qu'un troisième bloc de filtrage 23 chargé du filtrage des vitesses angulaires de chacun des axes de roulis, de tangage et de lacet à des fins de calcul de commandes de stabilisation.

Ces blocs de filtrage comprenant différents filtres tels que des filtres passe-bas et des filtres à encoche, permettent essentiellement de filtrer les informations issues des capteurs inertiel(s) 1 ou de pression 2 afin par exemple de supprimer certaines fréquences des mesures et d'atténuer ou de supprimer l'effet de perturbations extérieures sur ces mesures, telles que les vibrations générées par la rotation du rotor principal de l'aéronef.

Par ailleurs, si au moins un des blocs de filtrage est capable de supprimer d'une mesure donnée l'effet des vibrations générées par la rotation du rotor principal de l'aéronef, il est également possible d'isoler ces vibrations et de les utiliser afin de déterminer la fréquence de rotation du rotor principal.

Ainsi, selon un autre mode de réalisation, l'instrument de secours permet de déterminer la fréquence de rotation du rotor principal, puis de l'afficher sur l'unité de visualisation 4.

L'instrument de secours 10 intègre également un logiciel paramétrable et différents fichiers de paramètres stockés dans la mémoire 8 de l'instrument de secours.

En effet, les caractéristiques des différents filtres contenus dans les blocs de filtrage 21, 22 et 23, doivent être adaptés à chaque aéronef sur lequel l'instrument de secours 10 est installé.

De même, les lois de stabilisation, bien que communes à chaque aéronef, intègrent des coefficients qui sont fonction du type d'aéronef sur lequel est utilisé l'instrument de secours 10.

Ainsi, ces fichiers de paramètres intègrent les coefficients des lois de stabilisation ainsi que les caractéristiques applicables à l'ensemble des filtres pour chaque type d'aéronef.

De fait, l'instrument de secours 10 grâce aux différents fichiers de paramètres 8 et au logiciel paramétrable, adapte automatiquement les lois de stabilisation et les différents filtres à l'aéronef sur lequel il est installé.

En conséquence, un unique instrument de secours 10 est utilisable sur différents aéronefs, ce qui permet de réduire le coût de cet instrument, aussi bien au niveau de la fabrication que de la maintenance et de la gestion des pièces de rechange.

L'instrument de secours 10 est relié également à un moyen de localisation 9 capable de déterminer un écart de l'aéronef par rapport à une trajectoire prédéterminée à suivre par l'aéronef.

En effet, il est intéressant de fournir au pilote l'information de cet écart par rapport à une trajectoire prédéterminée de l'aéronef, même en cas de panne du système principal de localisation.

L'instrument de secours 10 peut ainsi afficher cet écart par rapport à la trajectoire prédéterminée sur l'unité de visualisation 4.

De fait, le pilote visualise cet écart par rapport à la trajectoire prédéterminée qu'il doit suivre. Cette information est un élément de sécurité supplémentaire pour le pilote, notamment dans des phases particulières de vol telles que les phases d'approche finale et d'atterrissage.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

**Revendications**

1. Instrument de secours (10) pour un aéronef, comprenant :

   - au moins un capteur inertiel (1),
   - au moins un capteur de pression (2),
   - un moyen de calcul (3) auquel sont reliés lesdits capteurs inertiel(s) (1) et de pression (2) et apte à déterminer des informations critiques de vol dudit aéronef,
   - une mémoire (8) reliée audit moyen de calcul (3), et
   - une unité de visualisation (4) capable d'afficher lesdites informations critiques de vol en cas de panne d'un système d'information principal dudit aéronef,

   **caractérisé en ce que** ledit instrument de secours (10) intègre dans ladite mémoire (8) des lois de stabilisation permettant audit moyen de calcul (3) de déterminer des lois de commande en stabilisation afin de piloter des actionneurs (15) d'un pilote automatique dudit aéronef en cas de panne dudit pilote automatique, ledit moyen de calcul (3) comportant au moins une sortie apte à être reliée auxdits actionneurs (15), ledit moyen de calcul (3) comportant également au moins une entrée apte à être reliée à au moins un calculateur moteur FADEC (5) permettant audit instrument de secours (10) d'afficher sur ladite unité de visualisation (4) une information d'une première limite d'utilisation d'un ou des moteurs de l'aéronef et une information d'une marge de puissance ou de couple disponible vis-à-vis de ladite première limite d'utilisation en cas de panne d'un Instrument de Première Limitation.

2. Instrument selon la revendication 1,
   **caractérisé en ce que** ledit moyen de calcul (3) détermine, à partir d'un algorithme dédié présent dans ladite mémoire (8) ainsi que d'informations de fonctionnement d'un ou des moteurs de l'aéronef et de leur environnement fournies par ledit calculateur moteur FADEC (5), ladite première limite d'utilisation et ladite marge de puissance ou de couple disponible vis-à-vis de ladite première limite d'utilisation.

3. Instrument selon l'une quelconque des revendications 1 à 2,
   **caractérisé en ce que** ladite mémoire (8) comporte des instructions afin que ledit moyen de calcul (3) détermine les valeurs moyennes des vitesses angulaires de roulis, de tangage et de lacet en virages coordonnés dudit aéronef.

4. Instrument selon l'une quelconque des revendications 1 à 3,
   **caractérisé en ce que** ledit instrument de secours (10) intègre au moins un filtre à encoche (21) afin d'atténuer des effets de la rotation d'au moins un rotor principal dudit aéronef.

5. Instrument selon l'une quelconque des revendications 1 à 3,
   **caractérisé en ce que** ledit instrument de secours (10) intègre une pluralité de blocs de filtrage (21,22,23), chaque bloc de filtrage (21,22,23) comportant au moins un filtre à choisir dans une liste incluant au moins un filtre à encoche, un filtre passe-bas et un filtre à structure configurable.

6. Instrument selon l'une quelconque des revendications 1 à 3,
   **caractérisé en ce que** ledit instrument de secours (10) intègre trois blocs de filtrage (21,22,23), un premier bloc de filtrage (21) chargé de l'atténuation des effets de la rotation d'au moins un rotor principal dudit aéronef, un second bloc de filtrage (22) chargé de filtrer les modes de résonnance propres à chacun des axes de roulis, tangage et de lacet ainsi qu'un troisième bloc (23) de filtrage chargé du filtrage des vitesses angulaires de chacun des axes de roulis, de tangage et de lacet à des fins de calcul de commandes de stabilisation.

7. Instrument selon l'une quelconque des revendications 1 à 6,
   **caractérisé en ce que**, lesdites lois de stabilisation intégrant des coefficients fonction du type d'aéronef et les dits filtres possédant des caractéristiques fonction du type d'aéronef, ladite mémoire (8) contient un logiciel paramétrable et un fichier de paramètres correspondant à chaque type d'aéronef, ledit moyen de calcul (3) utilisant ledit logiciel paramétrable afin de modifier lesdits coefficients desdites lois de stabilisation et lesdites caractéristiques desdits filtres (21,22,23).

8. Instrument selon la revendication 7,
   **caractérisé en ce que** ledit moyen de calcul (3) comporte deux modules de calcul, un premier module de calcul déterminant lesdites caractéristiques desdits filtres composant lesdits blocs de filtrage (21,22,23) et lesdits coefficients desdites lois de stabilisation au cours d'un premier cycle, un second module de calcul déterminant lesdites lois de commande en stabilisation pilotant lesdits actionneurs (15) lors de chaque cycle suivant.

9. Instrument selon l'une quelconque des revendications 1 à 8,
   **caractérisé en ce que** ledit moyen de calcul (3) réalise un calcul d'une fréquence de rotation d'un rotor principal dudit aéronef et assure l'affichage de ladite fréquence de rotation sur ladite unité de visualisation (4).

10. Instrument selon l'une quelconque des revendications 1 à 9,
    **caractérisé en ce que** ledit instrument de secours (10) est relié à au moins un dispositif de localisation (9) détermine un écart dudit aéronef par rapport à une trajectoire prédéterminée que doit suivre ledit aéronef, ladite unité de visualisation (4) affichant ledit écart.

11. Procédé de fonctionnement d'un instrument de secours (10) pour un aéronef, ledit instrument de secours (10) comprenant :

    - au moins un capteur inertiel (1),
    - au moins un capteur de pression (2),
    - un moyen de calcul (3) auquel sont reliés lesdits capteurs inertiel(s) (1) et de pression (2) et qui comporte au moins une entrée apte à être reliée à au moins un calculateur moteur FADEC (5) et au moins une sortie apte à être reliée à des actionneurs (15) d'un pilote automatique,
    - une mémoire (8) reliée audit moyen de calcul (3), et
    - une unité de visualisation (4) reliée audit moyen de calcul (3),

    **caractérisé en ce que** ledit procédé comporte plusieurs étapes au cours desquelles :

- on mesure des données de vol par l'intermédiaire desdits capteurs inertiel(s) (1) et de pression (2),
- on détermine, par l'intermédiaire dudit moyen calcul (3), des informations critiques de vol,
- on affiche lesdites informations critiques de vol sur ladite unité de visualisation (4),
- on détermine des lois de commande en stabilisation par l'intermédiaire de lois de stabilisation intégrées dans ladite mémoire (8) dudit instrument de secours (10),
- on pilote selon lesdites lois de commande lesdits actionneurs (15) dudit pilote automatique dudit aéronef en cas de panne dudit pilote automatique, afin d'assurer la stabilisation dudit aéronef,
- on mesure des informations de fonctionnement d'un ou des moteurs dudit aéronef et de leur environnement par l'intermédiaire d'au moins un calculateur moteur FADEC (5),
- on détermine une première limite d'utilisation dudit ou desdits moteurs ainsi qu'une marge de puissance ou de couple disponible par rapport à ladite première limite d'utilisation,
- on affiche ladite première limite d'utilisation et ladite marge de puissance ou de couple disponible sur ladite unité de visualisation (4).

**12.** Procédé selon la revendication 11,
**caractérisé en ce que** ladite mémoire (8) comporte des instructions afin que ledit moyen de calcul (3) détermine les valeurs moyennes des vitesses angulaires de roulis, de tangage et de lacet en virages coordonnés dudit aéronef avant de déterminer lesdites lois de commande.

**13.** Procédé selon l'une quelconque des revendications 11 à 12,
**caractérisé en ce que** ledit instrument de secours (10) comporte une pluralité de blocs de filtrage (21,22,23) pour atténuer certaines fréquences desdites mesures desdits capteurs inertiel(s) (1) et de pression (2) et supprimer des perturbations extérieures affectant lesdites mesures.

**14.** Procédé selon l'une quelconque des revendications 11 à 13,
**caractérisé en ce que** ledit moyen de calcul (3) détermine une fréquence de rotation d'un rotor principal dudit aéronef et affiche ladite fréquence de rotation sur ladite unité de visualisation (4).

**15.** Procédé selon l'une quelconque des revendications 11 à 14,
**caractérisé en ce que** ledit instrument de secours (10) affiche un écart dudit aéronef par rapport à une trajectoire prédéterminée sur ladite unité de visualisation (4), ledit écart étant déterminé par au moins un dispositif de localisation (9) intégré audit instrument de secours (10).

**Patentansprüche**

**1.** Notinstrument (10) für ein Luftfahrzeug, mit

- mindestens einem Trägheitssensor (1),
- mindestens einem Drucksensor (2),
- einer Recheneinheit (3), an die der bzw. die Trägheitssensor(en) (1) und der bzw. die Drucksensor(en) (2) angeschlossen sind und die kritische Fluginformationen des Luftfahrzeugs bestimmen kann,
- einem mit der Recheneinheit (3) verbundenen Speicher (8), und
- einer Sichtanzeige (4), die die kritischen Fluginformationen im Fall einer Panne eines Hauptinformationssystems des Luftfahrzeugs anzeigen kann,

**dadurch gekennzeichnet, dass** das Notinstrument (10) in dem Speicher (8) Stabilisationsregeln gespeichert hat, die es der Recheneinheit (3) ermöglichen, Stabilisationssteuerregeln zu bestimmen, um Stellglieder (15) eines Autopiloten des Luftfahrzeugs im Fall einer Panne des Autopiloten zu steuern, wobei die Recheneinheit (3) mindestens einen Ausgang aufweist, der mit den Stellgliedern (15) verbunden werden kann, wobei die Recheneinheit (3) ebenfalls mindestens einen Eingang aufweist, der mit mindestens einem FADEC(Full Authority Digital Engine Control)-Motorrechner (5) verbunden werden kann, wodurch es dem Notinstrument (10) ermöglicht wird, auf der Sichtanzeige (4) eine Information über einen ersten Verwendungsgrenzwert eines der Motoren des Luftfahrzeugs und eine Information über eine Marge der verfügbaren Leistung oder des verfügbaren Drehmoments gegenüber dem ersten Verwendungsgrenzwert im Fall einer Panne eines Instruments für eine erste Begrenzung anzuzeigen.

**2.** Instrument nach Anspruch 1,
**dadurch gekennzeichnet, dass** die Recheneinheit (3) ausgehend von einem Spezialprogramm in dem Speicher (8) sowie von Betriebsinformationen eines Motors oder von Motoren des Luftfahrzeugs und ihrer Umgebung, die von dem Motorrechner FADEC (5) geliefert werden, den ersten Verwendungsgrenzwert und die verfügbare Leistungs- oder Drehmomentsmarge gegenüber dem ersten Verwendungsgrenzwert bestimmt.

3. Instrument nach einem der Ansprüche 1 bis 2,
**dadurch gekennzeichnet, dass** der Speicher (8) Befehle gespeichert hat, mit denen die Recheneinheit (3) die Mittelwerte von Winkelgeschwindigkeiten von Roll, Nick- und Gierbewegungen in zugehörigen Kurven des Luftfahrzeugs bestimmt.

4. Instrument nach einem der Ansprüche 1 bis 3,
**dadurch gekennzeichnet, dass** das Notinstrument (10) mindestens einen Sperrfilter (21) umfasst, um die Wirkungen der Drehung mindestens eines Hauptrotors des Luftfahrzeugs abzuschwächen.

5. Instrument nach einem der Ansprüche 1 bis 3,
**dadurch gekennzeichnet, dass** das Notinstrument (10) eine Mehrzahl von Filterblöcken (21, 22, 23) umfasst, wobei jeder Filterblock (21, 22 ,23) mindestens einen Filter aufweist, der aus einer Liste gewählt ist, die mindestens einen Sperrfilter, einen Tiefpassfilter und einen Filter mit konfigurierbarer Struktur aufweist.

6. Instrument nach einem der Ansprüche 1 bis 3,
**dadurch gekennzeichnet, dass** das Notinstrument (10) drei Filterblöcke (21, 22, 23) umfasst, einen ersten Filterblock (21) zur Dämpfung von Wirkungen der Drehung des mindestens einen Hauptrotors des Luftfahrzeugs, einen zweiten Filterblock (22), der dazu bestimmt ist, die Eigenfrequenzmoden an jeder der Rollachsen, Nickachsen und Gierachsen zu filtern, sowie einen dritten Filterblock (23) zur Filterung von Winkelgeschwindigkeiten einer jeden der Rollachsen, Nickachsen und Gierachsen zu Zwecken der Berechnung von Stabilisationsbefehlen.

7. Instrument nach einem der Ansprüche 1 bis 6,
**dadurch gekennzeichnet, dass** die Stabilisationsregeln Luftfahrzeugsbetriebskoeffizienten umfassen und die Filter Luftfahrzeugsbetriebseigenschaften aufweisen, wobei der Speicher (8) ein parametrierbares Programm und eine Parametertabelle enthält, die jedem Luftfahrzeugstyp entspricht, wobei die Recheneinheit (3) das parametrierbare Programm verwendet, um die Koeffizienten der Stabilisierungsregeln und die Eigenschaften der Filter (21, 22, 23) abzuändern.

8. Instrument nach Anspruch 7,
**dadurch gekennzeichnet, dass** die Recheneinheit (3) zwei Rechenmodule aufweist, ein erstes Rechenmodul, welches die Eigenschaften der Filter bestimmt, aus denen sich die Filterblöcke (21, 22, 23) zusammensetzen, sowie die Koeffizienten der Stabilisierungsregeln während eines ersten Durchlaufs, sowie ein zweites Rechenmodul, welches die Stabilisierungssteuerregeln bestimmt, mit denen die Stellglieder (15) während jedes folgenden Durchlaufs gesteuert werden.

9. Instrument nach einem der Ansprüche 1 bis 8,
**dadurch gekennzeichnet, dass** die Recheneinheit (3) eine Berechnung einer Drehfrequenz eines Hauptrotors des Luftfahrzeugs durchführt und die Anzeige dieser Drehfrequenz auf der Sichtanzeige (4) sicherstellt.

10. Instrument nach einem der Ansprüche 1 bis 9,
**dadurch gekennzeichnet, dass** das Notinstrument (10) mit mindestens einer Lokalisierungsvorrichtung (9) verbunden ist, die eine Abweichung des Luftfahrzeugs gegenüber einer vorbestimmten Flugstrecke, der das Luftfahrzeug folgen muss, bestimmt, wobei die Sichtanzeige (4) die Abweichung anzeigt.

11. Verfahren zum Betrieb eines Notinstruments (10) für ein Luftfahrzeug, wobei das Notinstrument (10) aufweist:

- mindestens einen Trägheitssensor (1),
- mindestens einen Drucksensor (2),
- eine Recheneinheit (3), an die der bzw. die Trägheitssensor(en) (1) und der bzw. die Drucksensor(en) (2) angeschlossen sind, und die mindestens einen Eingang aufweist, der mit mindestens einem FADEC(Full Authority Digital Engine Control)-Motorrechner (5) verbunden werden kann, und mindestens einen Ausgang aufweist, der mit Stellgliedern (15) eines Autopiloten verbunden werden kann,
- einen Speicher (8), der mit der Recheneinheit (3) verbunden ist, und
- eine Sichtanzeige (4), die mit der Recheneinheit (3) verbunden ist,

**dadurch gekennzeichnet, dass** das Verfahren mehrere Schritte aufweist, während denen:

- Flugdaten mit den Trägheitssensoren (1) und Drucksensoren (2) gemessen werden,
- mit der Recheneinheit (3) kritische Fluginformationen bestimmt werden,
- die kritischen Fluginformationen auf der Sichtanzeige (4) angezeigt werden,
- Stabilisierungssteuerregeln mit Stabilisierungsregeln bestimmt werden, die im Speicher (8) des Notinstruments (10) gespeichert sind,
- gemäß dieser Steuerregeln die Stellglieder (15) des Autopiloten des Luftfahrzeugs im Falle einer Panne des Autopiloten gesteuert werden, um die Stabilisierung des Luftfahrzeugs sicherzustellen,
- Betriebsinformationen des einen Motors oder der Motoren des Luftfahrzeugs und ihrer Umgebung mit mindestens einem FADEC(Full Authority Digital Engine Control)-Motorrechner (5) gemessen werden,
- ein erster Verwendungsgrenzwert des Motors oder der Motoren sowie eine Marge der verfügbaren Leistung oder des verfügbaren Drehmoments bezüglich des ersten Verwendungsgrenzwertes bestimmt werden,
- der erste Verwendungsgrenzwert und die Marge der verfügbaren Leistung oder des verfügbaren Drehmoments auf der Sichtanzeige (4) angezeigt werden.

**12.** Verfahren nach Anspruch 11,
**dadurch gekennzeichnet, dass** der Speicher (8) Befehle gespeichert hat, damit die Recheneinheit (3) die Mittelwerte von Winkelgeschwindigkeiten von Roll-, Nick-und Gierbewegungen in entsprechenden Kurven des Luftfahrzeugs zu bestimmen, bevor die Steuerregeln bestimmt werden.

**13.** Verfahren nach einem der Ansprüche 11 bis 12,
**dadurch gekennzeichnet, dass** das Notinstrument (10) eine Mehrzahl von Filterblöcken (21, 22, 23) aufweist, um bestimmte Frequenzen der Messungen der Trägheitssensoren (1) und der Drucksensoren (2) zu dämpfen und um äußere Zerstörungen zu unterdrücken, die die Messungen beeinträchtigen.

**14.** Verfahren nach einem der Ansprüche 11 bis 13,
**dadurch gekennzeichnet, dass** die Recheneinheit (3) eine Drehfrequenz eines Hauptrotors des Luftfahrzeugs bestimmt und diese Drehfrequenz auf der Sichtanzeige (4) anzeigt.

**15.** Verfahren nach einem der Ansprüche 11 bis 14,
**dadurch gekennzeichnet, dass** das Notinstrument (10) eine Abweichung des Luftfahrzeugs von einer vorbestimmten Flugstrecke auf der Sichtanzeige (4) anzeigt, wobei die Abweichung von mindestens einer Lokalisierungsvorrichtung (9) bestimmt wird, die in das Notinstrument (10) integriert ist.

**Claims**

**1.** Standby instrument (10) for an aircraft, comprising:

- at least one inertial sensor (1),
- at least one pressure sensor (2),
- a calculation means (3) to which said inertial sensor(s) (1) and pressure sensor(s) (2) are connected and suitable for determining critical flight information of said aircraft,
- a memory (8) connected to said calculation means (3), and
- a display unit (4) capable of displaying said critical flight information in the event of a failure of a main information system of said aircraft,

**characterised in that** said standby instrument (10) incorporates in said memory (8) stabilisation laws enabling said calculation means (3) to determine stabilisation control laws in order to control actuators (15) of an autopilot of said aircraft in the event of said autopilot failing, said calculation means (3) comprising at least one output suitable for being connected to said actuators (15), said calculation means (3) also comprising at least one input suitable for being connected to at least one FADEC engine computer (5) enabling said standby instrument (10) to display information on said display unit (4) about a first utilisation limit of one or more engines of the aircraft and about an available power or torque margin relative to said first utilisation limit in the event of a failure of a First-Limitation Instrument.

**2.** Instrument according to Claim 1,

**characterised in that** said calculation means (3) determines, using a dedicated algorithm present in said memory (8) and information about the operation of one or more engines of the aircraft and about their environment delivered by said FADEC engine computer (5), said first utilisation limit and said available power or torque margin relative to said first utilisation limit.

3. Instrument according to any one of Claims 1 to 2,
**characterised in that** said memory (8) comprises instructions to enable said calculation means (3) to determine the average values of the angular speeds of roll, of pitch and of yaw in coordinated turns of said aircraft.

4. Instrument according to any one of Claims 1 to 3,
**characterised in that** said standby instrument (10) incorporates at least one notch filter (21) in order to attenuate effects of the rotation of at least one main rotor of said aircraft.

5. Instrument according to any one of Claims 1 to 3,
**characterised in that** said standby instrument (10) incorporates a plurality of filter blocks (21,22,23), each filter block (21,22,23) comprising at least one filter to be selected from a list including at least a notch filter, a lowpass filter and a filter of configurable structure.

6. Instrument according to any one of Claims 1 to 3,
**characterised in that** said standby instrument (10) incorporates three filter blocks (21,22,23), a first filter block (21) for attenuating the effects of the rotation of at least one main rotor of said aircraft, a second filter block (22) for filtering the resonant modes specific to each of the roll, pitch and yaw axes, and a third filter block (23) for filtering the angular speeds of each of the roll, pitch and yaw axes in order to calculate stabilisation commands.

7. Instrument according to any one of Claims 1 to 6,
**characterised in that**, with said stabilisation laws incorporating coefficients that are a function of the type of aircraft and said filters possessing characteristics that are a function of the type of aircraft, said memory (8) contains parameterisable software and a file of parameters corresponding to each type of aircraft, said calculation means (3) using said parameterisable software in order to modify said coefficients of said stabilisation laws and said characteristics of said filters (21,22,23).

8. Instrument according to Claim 7,
**characterised in that** said calculation means (3) comprises two calculation modules, a first calculation module determining said characteristics of said filters making up said filter blocks (21,22,23) and said coefficients of said stabilisation laws during a first cycle, a second calculation module determining said stabilisation control laws controlling said actuators (15) during each following cycle.

9. Instrument according to any one of Claims 1 to 8,
**characterised in that** said calculation means (3) calculates a frequency of rotation of a main rotor of said aircraft and displays said frequency of rotation on said display unit (4).

10. Instrument according to any one of Claims 1 to 9,
**characterised in that** said standby instrument (10) is connected to at least one localisation device (9) determines a deviation of said aircraft from a predetermined path that is to be followed by said aircraft, said display unit (4) displaying said deviation.

11. Method of operating a standby instrument (10) for an aircraft, said standby instrument (10) comprising:

   - at least one inertial sensor (1),
   - at least one pressure sensor (2),
   - a calculation means (3) to which said inertial sensor(s) (1) and pressure sensor(s) (2) are connected and which comprises at least one input suitable for being connected to at least one FADEC engine computer (5) and at least one output suitable for being connected to actuators (15) of an autopilot,
   - a memory (8) connected to said calculation means (3), and
   - a display unit (4) connected to said calculation means (3),

**characterised in that** said method comprises several steps in the course of which:

- flight data is measured by means of said inertial sensor(s) (1) and pressure sensor(s) (2),
- critical flight information is determined by means of said calculation means (3),
- said critical flight information is displayed on said display unit (4),
- stabilisation control laws are determined by means of stabilisation laws incorporated in said memory (8) of said standby instrument (10),
- said actuators (15) of said autopilot of said aircraft are controlled according to said control laws in the event of said autopilot failing, in order to stabilise said aircraft,
- information about the operation of one or more engines of said aircraft and about their environment is measured by means of at least one FADEC engine computer (5),
- a first utilisation limit of said engine(s) and an available power or torque margin relative to said first utilisation limit are determined,
- said first utilisation limit and said available power or torque margin are displayed on said display unit (4).

12. Method according to Claim 11,
**characterised in that** said memory (8) comprises instructions to enable said calculation means (3) to determine the average values of the angular speeds of roll, of pitch and of yaw in coordinated turns of said aircraft prior to determining said control laws.

13. Method according to any one of Claims 11 to 12,
**characterised in that** said standby instrument (10) comprises a plurality of filter blocks (21,22,23) for attenuating certain frequencies of said measurements of said inertial sensor(s) (1) and pressure sensor(s) (2) and eliminating external disturbances that affect said measurements.

14. Method according to any one of Claims 11 to 13,
**characterised in that** said calculation means (3) determines a frequency of rotation of a main rotor of said aircraft and displays said frequency of rotation on said display unit (4).

15. Method according to any one of Claims 11 to 14,
**characterised in that** said standby instrument (10) displays a deviation of said aircraft from a predetermined path on said display unit (4), said deviation being determined by at least one localisation device (9) incorporated in said standby instrument (10).

## Fig.1

## Fig.2

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2749545
- FR 2756256
- US 3752420 A
- FR 2784457
- FR 2855303
- FR 2903787
- FR 2919066
- US 2007164166 A
- FR 2924213
- EP 2301844 A